# EUROPEAN PATENT SPECIFICATION

(11) **EP 1 300 069 B1**
(45) Date of publication and mention of the grant of the patent: **03.08.2005**
(21) Application number: 02078986.3
(22) Date of filing: 27.09.2002
(51) Int. Cl.: A01K 5/02, G01N 33/02, G01N 19/04

(54) **A device for determining the adhesiveness factor of a particular sort of feed**
Vorrichtung zur Bestimmung des Haftfähigkeitsfaktors eines bestimmten Nahrungsmittels
Dispositif pour déterminer le facteur d'adhésivité d'une sorte particulière d'aliment

(30) Priority: 03.10.2001 NL 1019091
(43) Date of publication of application: 09.04.2003
(73) Proprietor: Lely Enterprises AG, 6300 ZUG (CH)
(72) Inventor: Voogd, Lucien Eliza Niels, 4143 HG Leerdam (NL); van den Berg, Karel, 2971 BR Bleskensgraaf (NL)
(74) Representative: Corten, Maurice Jean F.M.

(56) References cited:
- DE-A- 19 744 991
- GB-A- 1 165 313
- US-A- 4 716 768
- DATABASE WPI Week 199114 Derwent Publications Ltd., London, GB; AN 1991-099772 XP002260034 & SU 1 552 097 A (SEMIPALATIN MEAT), 23 March 1990 (1990-03-23)

## Description

The invention relates to a device for determining the adhesiveness factor of a particular sort of seed. Such a device is known from SU-A-1552097.

A device for supplying feed is known from Dutch patent application 1010898. Although this known device functions properly in practice, it appears that, in order to guarantee proper sanitary conditions of the device, a regular cleaning of the device is desirable. This cleaning takes much time and entails costs, while the device cannot be used during cleaning.

It is an object of the invention to obviate the drawbacks related to the cleaning at least partially.

For that purpose the invention relates to a device for determining the adhesiveness factor of a particular sort of feed, characterized in that the device is provided with a tube-shaped chute respectively a channel-shaped chute having a first end and a second end, the second end being located below the first end, with a contact-determining means for determining the moment of contact of an amount of the particular sort of feed with a first place of the tube-shaped chute respectively the channel-shaped chute, with a leaving-determining means for determining the moment when the amount of the particular sort of feed leaves a second place of the tube-shaped chute respectively the channel-shaped chute, said second place being remote from the first place, and with a period-of-time-determining means for determining the period of time between the moment of contact and the moment of leaving, whereby means are provided for converting the measured period of time into an adhesiveness factor. Although the adhesiveness factor can be estimated by a person, this estimation always remains subject to subjective determination criteria. By means of the device according to the invention it is possible to obtain a uniform and objective determination of the adhesiveness factor. In this case the starting point is the fact that the adhesiveness of feed can be determined by the time required by the feed for being moved under the influence of gravitational force over a certain distance through a tube-shaped chute respectively a channel-shaped chute. These data can be used when supplying feed to an animal.

In this case the period-of-time-determining means is in particular suitable for storing and/or displaying the period of time.

Although it is possible to determine the adhesiveness factor manually with the aid of the determined period of time, it is preferred when the period-of-time-determining means can be connected with a computer which is provided with a program for converting the period of time into an adhesiveness factor, the adhesiveness factor being stored and/or displayed. Such a program may comprise a comparison program and/or a correspondence table and/or an algorithm.

For the purpose of simulating a measurement situation which can be compared with the device used in practice for supplying feed to animals, it is preferred when the tube-shaped respectively a channel-shaped chute makes an angle with the horizontal, said angle being situated between 45° and 80°, preferably between 65° and 75°. An unequivocal determination of the adhesiveness factor is obtained when the measurement is carried out at one standard angle, for example of 73°.

An unequivocal determination of the adhesiveness factor is obtained when the measurement is carried out by means of a tube-shaped chute respectively a channel-shaped chute whose surface, which can be brought into contact with the amount of the particular sort of feed, has a predetermined friction coefficient. It is particularly advantageous and hygienic when the tube-shaped chute respectively the channel-shaped chute is made of stainless steel.

Although the amount of feed can be placed manually on the tube-shaped chute respectively the channel-shaped chute it is advantageous, for obtaining an accurate measurement, when the device is provided with a hopper for containing a stock of the particular sort of feed. As a result of this, substances present on a hand, such as sweat and the like, do not influence the measurement results. The device is preferably provided with a metering means for supplying a certain amount of feed in metered portions to the tube-shaped chute respectively the channel-shaped chute. This makes it possible always to test the same amount of feed, which contributes to the accuracy of the measurement results.

The invention will now be further elucidated with reference to an embodiment shown in the drawing in which:

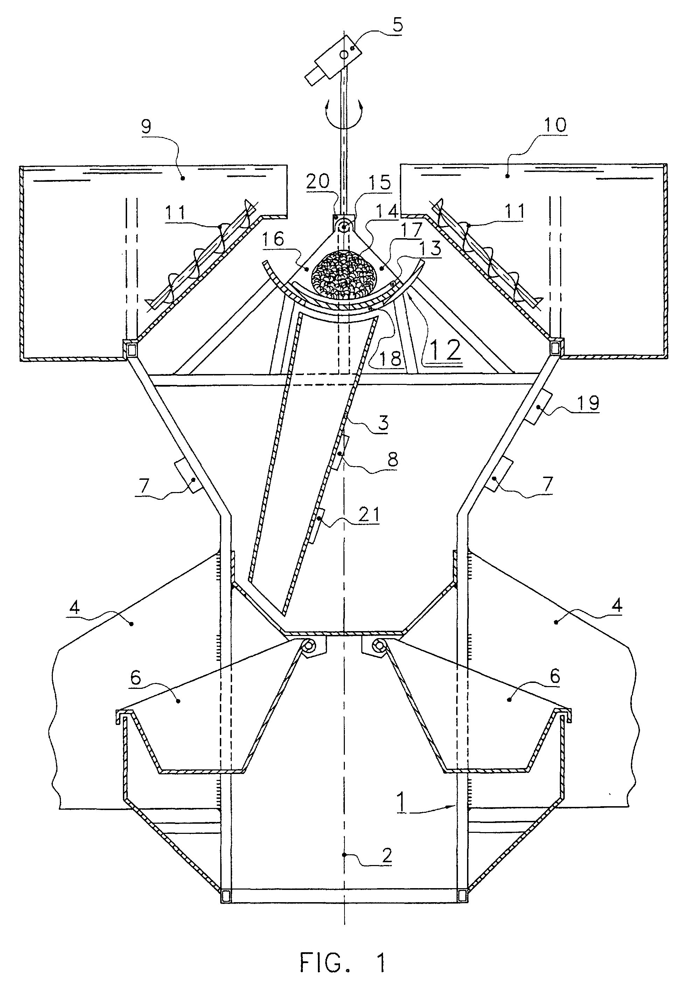

Figure 1 is a schematic cross-section of an embodiment of a device according to the invention.

In the embodiment shown in Figure 1 a framework 1 is disposed around a central axis 2, said framework 1 having a substantially circular circumference. At the upper side of the framework 1 there are provided a number of hoppers 9, 10 (two of which are shown in the drawing). For that purpose not further shown facilities are fitted to the framework 1 for placing the hoppers 9, 10. Each hopper 9, 10 can contain a particular sort of feed.

The framework 1 may be provided with partition walls 4 that are detachably fitted to the framework 1.

Feed troughs 6 for the animals are disposed in circular arrangement in the lower part of the device. By means of the geometry of the device, in the embodiment shown constituted by a feeding column, it is achieved that the construction occupies little space, while the accessibility of the feeding column to the animals is optimal from all directions.

The feeding column is further provided with conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally arranged, which receptacle receives an amount of feed which is conveyed by the first conveyor 11 from the hopper 9, 10 to the receptacle 12. As a first conveyor 11, an auger, gripper, belt conveyor or any other device known per se for conveying feed can be used.

A second conveyor 3, preferably constituted by a tube-shaped chute respectively a channel-shaped chute, is suitable for conveying the amount of feed from the receptacle 12 to the relevant feed trough 6. For the purpose of conveying the feed to the relevant feed trough 6 it is advantageous when the tube-shaped chute 3 is rotatably mounted in the feeding column. The tube-shaped chute respectively a channel-shaped chute is preferably made of stainless steel.

The device is provided with a control device 19. Said control device 19 controls the components of the device in such a way that the sorts of feed are supplied to the feed trough 6 in order of increasing adhesiveness factor.

The order in which the sorts of feed are placed in the hoppers may correspond with the order of increasing adhesiveness of the feed. By controlling the components accordingly it can be ensured that the conveying means pass in order along the hoppers and consequently take the sorts of feed out of the hoppers in order of adhesiveness. In this situation it is advantageous when the control device 19 is provided with a computer comprising a memory with a correspondence table containing data in relation to the contents of the hoppers. Although this way of supplying feed to the hoppers is possible, this has to be carried out very carefully in order to avoid errors in the feed supply.

Such errors are avoided when the device is provided with feed-determining means 5 for determining the sort of feed in a hopper 9, 10. Such feed-determining means may comprise for example an olfactometer, a colour meter or picture recognition equipment (such as described for example in U.S. patent 4,843,561). The control device 19 is provided with a computer comprising a memory with a correspondence table containing values in relation to the adhesiveness factor of the sorts of feed 13, 14. Thus, when the feed-determining means 5 have determined the sort of feed, the computer can simply determine the adhesiveness factor.

The control device 19 thus ensures that, at the supply of feed, the feed having the lowest adhesiveness is conveyed first by the conveying means. This feed, moving relatively fast due to the small adhesiveness, may have a sweeping respectively cleaning effect on the rests of feed being left from a previous supply of feed.

In the embodiment shown the device is provided with a container, in the embodiment shown for example the hopper 10, for containing at least substantially non-adhering, edible packaging material. Said packaging material may be constituted for example by dry feed, in particular grass.

The first conveyor 11 supplies a certain amount of said packaging material to the receptacle 12, where it will be situated as a kind of bed 13 on the bottom of the receptacle 12.

When the bed 13 has been laid on the bottom, the first conveyor 11 of the hopper 9 is driven for supplying a certain amount of for example rather adhesive or wet feed to the receptacle, where said amount of feed 14 will be situated on the bed 13.

For the purpose of conveying the package consisting of the bed 13 and the amount of feed 14 to the tube-shaped chute pipe 3, the receptacle 12 is provided with a bottom which is designed to be opened. In the embodiment shown this is realised in that the bottom of the receptacle 12 has two halves 16 and 17 which are hingeable about an axis 15. When the halves 16, 17 move away from each other, there is thus created a chute aperture 18 through which the package falls into the tube-shaped chute 3.

The control device 19, although another control device may serve as well for that purpose, controls the opening of the bottom of the receptacle 12. Said control device 19 preferably also controls the operation sequence of the first and second conveyors 11 respectively 3, so that first the edible packaging material and then the amount of feed will come into in the receptacle 12.

Due to the fact that the amount of feed 14 lies on the bed 13 of packaging material, for example a grass bed, in the case that the feed is adhesive, at least substantially no parts of feed will adhere to the components of the device that could come into contact with the feed. Moreover, the package of feed and packaging material remains interesting for an animal to eat.

An extremely hygienic use of the device is obtained when the receptacle 12 has such a shape that, when the package of feed 14 and the bed 13 of edible packaging material falls through the bottom, the bed 13 of edible packaging material will surround at least partially the feed 14. In this situation there can be applied in particular receptacles 12 narrowing in downward direction, while a desired shape can simply be determined by standard "trial and error" experiments.

There are provided identification means 7 for identifying an individual animal. In the embodiment shown the identification means 7 are fitted to the framework 1, but it will be obvious that the identification means can also be disposed at other places, such as for example the feed troughs 6. With the aid of the identification means 7 the identity of an animal present at a feed trough 6 is automatically established. By means of correspondence tables stored in the memory of for example the control device 19 the amount of feed intended for that animal can be supplied. By means of a weighing device 20 known per se this amount can be determined. With the aid of data from the animal identification means 7 the control device 19 further controls the movement of the tube-shaped chute 3, so that the latter is located above the correct feed trough 6. The control device 19 further controls the drive of the conveyors 11.

For determining the adhesiveness factor of a sort of feed a certain amount of a sort of feed is supplied to the tube-shaped chute respectively a channel-shaped chute 3. A contact-determining means 8 determines the moment of contact of an amount of the particular sort of feed with a first place of the tube-shaped chute respectively the channel-shaped chute 3. A leaving-determining means 21 determines the moment when the amount of the particular sort of feed leaves a second place of the tube-shaped chute respectively the channel-shaped chute 3, said second place being remote from the first place. The contact-determining means 8 and the leaving-determining means 21 can be connected with the control device 19, in particular the computer thereof, the latter determining as a period-of-time-determining means the period of time between the moment of contact and the moment of leaving. Said period of time can be stored and/or displayed.

The computer is provided with a program for converting the period of time into an adhesiveness factor, which adhesiveness factor can then be stored and/or displayed. For the purpose of measuring the adhesiveness factor in a uniform, reliable and reproducible manner, the tube-shaped chute respectively a channel-shaped chute is placed at an angle with the horizontal, said angle being approximately 73°. In order to place the tube-shaped chute respectively the channel-shaped chute in the measurement position, there may be provided non-shown means (such as cylinders) for adjusting the angle of the tube-shaped chute respectively the channel-shaped chute. However, a standard measurement angle may also be situated between 45° and 80°, preferably between 65° and 75°. Moreover it is advantageous when the surface of the tube-shaped chute respectively the channel-shaped chute which can be brought into contact with the amount of the particular sort of feed has a predetermined friction coefficient. As a result of this the computer has not to be provided with calculation programs taking the various parameters into account when determining the adhesiveness factor.

## Claims

1. A device for determining the adhesiveness factor of a particular sort of feed (13, 14), **characterized in that** the device is provided with a tube-shaped chute respectively a channel-shaped chute having a first end and a second end, the second end being located below the first end, with a contact-determining means for determining the moment of contact of an amount of the particular sort of feed with a first place of the tube-shaped chute respectively the channel-shaped chute, with a leaving-determining means for determining the moment when the amount of the particular sort of feed leaves a second place of the tube-shaped chute respectively the channel-shaped chute, said second place being remote from the first place, and with a period-of-time-determining means for determining the period of time between the moment of contact and the moment of leaving, whereby means are provided for converting the measured period of time into an adhesiveness factor.

2. A device as claimed in claim 1, **characterized in that** the period-of-time-determining means stores and/or displays the period of time.

3. A device as claimed in claim 1 or 2, **characterized in that** the period-of-time-determining means can be connected with a computer provided with a program for converting the period of time into an adhesiveness factor, the adhesiveness factor being stored and/or displayed.

4. A device as claimed in any one of the preceding claims 1, 2, or 3, **characterized in that** the tube-shaped chute respectively a channel-shaped chute makes an angle with the horizontal, said angle being situated between 45° and 80°, preferably between 65° and 75°.

5. A device as claimed in any one of the preceding claims, **characterized in that** the surface of the tube-shaped chute respectively a channel-shaped chute which can be brought into contact with the amount of the particular sort of feed has a predetermined friction coefficient.

6. A device as claimed in any one of the preceding claims, **characterized in that** the tube-shaped chute respectively a channel-shaped chute is made of stainless steel.

7. A device as claimed in any one of the preceding claims, **characterized in that** the device is provided with a hopper (9, 10) for containing a stock of the particular sort of feed (13, 14).

8. A device as claimed in claim 7, **characterized in that** the device is provided with a metering device for supplying a certain amount of feed in metered portions to the channel-shaped chute respectively the tube-shaped chute.

## Patentansprüche

1. Vorrichtung zur Ermittlung des Haftungsfaktors einer bestimmten Sorte von Futter (13, 14),
**dadurch gekennzeichnet, daß** die Vorrichtung versehen ist mit einem rohrförmigen Schacht bzw. einem kanalförmigen Schacht, der ein erstes Ende und ein zweites Ende aufweist, wobei das zweite Ende unter dem ersten Ende liegt, mit einer Kontaktzeitpunkt-Ermittlungsvorrichtung zur Ermittlung des Zeitpunkts des Kontakts einer Menge der bestimmten Futtersorte mit einer ersten Stelle des rohrförmigen Schachts bzw. des kanalförmigen Schachts, mit einer Verlassenszeitpunkt-Ermittlungsvorrichtung zur Ermittlung des Zeitpunkts, zu dem die Menge der bestimmten Futtersorte eine zweite Stelle des rohrförmigen Schachts bzw. des kanalförmigen Schachts verläßt, wobei die zweite Stelle von der ersten Stelle entfernt ist, und mit einer Zeitraum-Ermittlungsvorrichtung zur Ermittlung des Zeitraums zwischen dem Zeitpunkt des Kontakts und dem Zeitpunkt des Verlassens, wobei Vorrichtungen vorhanden sind, um den gemessenen Zeitraum in einen Haftungsfaktor umzuwandeln.

2. Vorrichtung nach Anspruch 1,
**dadurch gekennzeichnet, daß** die Zeitraum-Ermittlungsvorrichtung den Zeitraum speichert und/oder anzeigt.

3. Vorrichtung nach Anspruch 1 oder 2,
**dadurch gekennzeichnet, daß** die Zeitraum-Ermittlungsvorrichtung mit einem Computer verbunden werden kann, der mit einem Programm zur Umwandlung des Zeitraumes in einen Haftungsfaktor versehen ist, wobei der Haftungsfaktor gespeichert und/oder angezeigt wird.

4. Vorrichtung nach einem der vorhergehenden Ansprüche 1, 2 oder 3,
**dadurch gekennzeichnet, daß** der rohrförmige Schacht bzw. ein kanalförmiger Schacht einen Winkel mit der Horizontalen bildet, wobei der Winkel zwischen 45° und 80°, vorzugsweise zwischen 65° und 75° beträgt.

5. Vorrichtung nach einem der vorhergehenden Ansprüche, **dadurch gekennzeichnet, daß** die Oberfläche des rohrförmigen Schachts bzw. eines kanalförmigen Schachts, die mit der Menge der bestimmten Futtersorte in Kontakt gebracht werden kann, einen vorgegebenen Reibungskoeffizienten aufweist.

6. Vorrichtung nach einem der vorhergehenden Ansprüche, **dadurch gekennzeichnet, daß** der rohrförmige Schacht bzw. ein kanalförmiger Schacht aus rostfreiem Stahl hergestellt ist.

7. Vorrichtung nach einem der vorhergehenden Ansprüche, **dadurch gekennzeichnet, daß** die Vorrichtung mit einem Vorratsbehälter (9, 10) zur Aufnahme eines Vorrats der bestimmten Sorte von Futter (13, 14) versehen ist.

8. Vorrichtung nach Anspruch 7,
**dadurch gekennzeichnet, daß** die Vorrichtung mit einer Dosiervorrichtung zum Zuführen einer bestimmten Menge an Futter in dosierten Portionen zu dem kanalförmigen Schacht bzw. dem rohrförmigen Schacht versehen ist.

## Revendications

1. Dispositif pour déterminer le facteur d'adhésivité d'une sorte particulière d'aliment (13, 14), **caractérisé en ce que** le dispositif est pourvu d'une chute en forme de tube respectivement une chute en forme de conduit ayant une première et une seconde extrémités, la seconde extrémité étant située en dessous de la première extrémité, avec un moyen de détermination de contact pour déterminer le moment de contact d'une quantité de la sorte particulière d'aliment avec un premier emplacement de la chute en forme de tube respectivement la chute en forme de conduit, avec un moyen de détermination de départ pour déterminer le moment où la quantité de la sorte particulière d'aliment quitte un second emplacement de la chute en forme de tube respectivement la chute en forme de conduit, ledit second emplacement étant éloigné du premier emplacement, et avec un moyen de détermination d'une période de temps pour déterminer la période de temps entre le moment de contact et le moment de départ, moyennant quoi des moyens sont fournis pour convertir la période de temps mesurée en facteur d'adhésivité.

2. Dispositif selon la revendication 1, **caractérisé en ce que** le moyen de détermination d'une période de temps mémorise et/ou affiche la période de temps.

3. Dispositif selon la revendication 1 ou 2, **caractérisé en ce que** le moyen de détermination d'une période de temps peut être raccordé à un ordinateur pourvu d'un programme pour convertir la période de temps en facteur d'adhésivité, le facteur d'adhésivité étant mémorisé et/ou affiché.

4. Dispositif selon l'une quelconque des revendications précédentes 1, 2 ou 3, **caractérisé en ce que** la chute en forme de tube respectivement une chute en forme de conduit forme un angle avec l'horizontale, ledit angle étant situé entre 45° et 80°, de préférence entre 65° et 75°.

5. Dispositif selon l'une quelconque des revendications précédentes, **caractérisé en ce que** la surface de la chute en forme de tube respectivement une chute en forme de conduit qui peut être amenée en contact avec la quantité de la sorte particulière d'aliment a un coefficient de friction prédéterminé.

6. Dispositif selon l'une quelconque des revendications précédentes, **caractérisé en ce que** la chute en forme de tube respectivement une chute en forme de conduit est faite d'acier inoxydable.

7. Dispositif selon l'une quelconque des revendications précédentes, **caractérisé en ce que** le dispositif est pourvu d'une trémie (9, 10) pour contenir un stock de la sorte particulière d'aliment (13, 14).

8. Dispositif selon la revendication 7, **caractérisé en ce que** le dispositif est pourvu d'un dispositif de dosage pour fournir une certaine quantité d'aliment en portions dosées à la chute en forme de conduit respectivement la chute en forme de tube.
